# EUROPEAN PATENT APPLICATION

(11) **EP 2 381 679 A2**
(43) Date of publication of application: **26.10.2011**
(21) Application number: 11163088.5
(22) Date of filing: 19.04.2011
(51) Int. Cl.: H04N 5/445

(54) **A receiver and a method for providing access to viewer-orderable television events**

(30) Priority: 20.04.2010 US 763567
(71) Applicant: EchoStar Technologies L.L.C., Englewood, CO 80112 (US)
(72) Inventor: Sokald, Mark John, Littleton, CO 80125 (US); Overbaugh, Daniel Mark, Aurora, CO Colorado 80016 (US)
(74) Representative: Needle, Jacqueline

(57) **Abstract**

To access an orderable television event, for example, a pay-per-view television event or a video-on-demand television event, preview video content (106) for the orderable television event is received and stored (202). The event is associated with one of a plurality of channel identifiers not associated with a television broadcast channel. A channel selection of the channel identifier associated with the orderable television event is received (204). In response to receiving the channel selection, the preview video content for the orderable television event is output for presentation to the user, for example, as a full-screen display (206).

## Description

The present invention relates to a receiver and a method for providing access to viewer-orderable television events.

Television receivers, or "set-top boxes", enable a viewer to receive hundreds of different standard-definition and high-definition broadcast television channels, each of which may deliver movies, news programs, sporting events, television series episodes, and the like according to some schedule determined primarily by the network or cable channel providing the programming.

In addition, many television content providers facilitate viewer access to special television events, such as pay-per-view (PPV) events and video-on-demand (VOD) events. Generally, pay-per-view events are television events, such as sporting events and concerts, which are transmitted "live" to those viewers that have ordered the event beforehand. Video-on-demand events are those events which may be viewed at any time when ordered by the viewer. These viewer-orderable events are typically not available under a normal service subscription available from the content provider, but may be specially ordered, normally for a fee.

Typically, such viewer-orderable events are accessible by way of a section of an electronic program guide (EPG) especially set aside for ordering and viewing the events. Thus, without entering that portion of the guide, the user may not be fully aware of the events currently available by way of the set-top box. More recently, some content providers have allowed access to the events by way of an assigned channel number in the EPG among the normal broadcast channels listed therein. In most cases, selecting that particular channel via the EPG, or by way of the normal channel access functions available on a remote control unit, results in the EPG viewer-orderable events section to be presented to the user, as if the viewer had accessed that section through the normal EPG access mechanism.

The present invention seeks to provide an alternative method to access or order viewer-orderable events.

According to a first aspect of the present invention, there is provided a method of providing access to a viewer-orderable television event, the method comprising:
receiving and storing preview video content for the orderable television event, wherein the orderable television event is associated with one of a plurality of channel identifiers not associated with a television broadcast channel;
receiving from a user a channel selection of the channel identifier associated with the orderable television event; and
in response to receiving the channel selection, outputting for presentation to the user the preview video content for the orderable television event.

Preferably, the preview video content is presented as a full-screen display.

In an embodiment, the method further comprises:
while outputting the preview video content, outputting for presentation to the user an on-screen graphic allowing a user to order the orderable television event; and
in response to receiving the order obtaining the video content of the orderable television event.

Preferably, the method further comprises:
receiving and outputting the video content of the orderable television event;
while outputting the video content of the orderable television event, receiving from the user a second channel selection of one of the plurality of channel identifiers assigned to a broadcast channel;
in response to receiving the second channel selection, storing a current time value of the video content of the orderable television event, and outputting for presentation to the user video content for the broadcast channel associated with the second channel selection;
receiving from the user a third channel selection for the channel identifier associated with the orderable television event; and
in response to receiving the third channel selection, outputting for presentation to the user and video content for the orderable television event, starting at the stored time value of the video content of the orderable television event.

The method may further comprise:
while outputting the preview video content, receiving from the user a second channel selection of one of the plurality of channel identifiers assigned to a broadcast channel;
in response to receiving the second channel selection, outputting for presentation to the user video content for the broadcast channel associated with the second channel selection;
receiving from the user a third channel selection for the channel identifier associated with the orderable television event; and
in response to receiving the third channel selection, outputting for presentation to the user the preview video content for the orderable television event, starting at the beginning of the preview video content.

Preferably, the preview video content and video content of the orderable television event are received as a single data file.

In an embodiment, the method may further comprise:
outputting an electronic program guide display for presentation to the user, wherein the electronic program guide display represents the plurality of channel identifiers;
wherein receiving from the user the channel selection of the channel identifier associated with the orderable television event comprises receiving a selection of a graphical element of the electronic program guide display representing the channel identifier associated with the orderable television event; and
wherein, when the outputting for presentation to the user of the preview video content for the orderable television event begins, ceasing outputting of the electronic program guide display.

Preferably, the method further comprises:
receiving and storing preview content for each of a plurality of orderable events comprising the first orderable television event; and
associating each of the orderable television events with a separate one of the plurality of channel identifiers.

Alternatively, the method may comprise:
receiving and storing preview content for each of a plurality of orderable events comprising the first orderable television event; and
associating a plurality of the orderable television events with a single one of the plurality of channel identifiers.

In an embodiment of the methods defined above, the orderable television event comprises one of a group consisting of a pay-per-view event and a video-on-demand event.

Preferably, the channel selection comprises a channel up or a channel down command.

Additionally, the channel selection comprises a direct channel entry command.

The present invention also extends to a video content receiver, comprising:
a content input interface for receiving video content of a plurality of broadcast channels, and for receiving preview video content and primary video content of a plurality of orderable video events, wherein each of the broadcast channels and each of the orderable video events is associated with a corresponding channel identifier;
a content output interface for outputting received video content and received preview video content for presentation to a user;
a user interface; and
control circuitry arranged to receive via the user interface a selection channel identifier indicating a channel selection for presentation;
wherein, if the selected channel identifier is associated with one of the broadcast channels, the control circuitry outputs via the content output interface the video content of an associated broadcast channel for presentation to the user;
wherein, if the selected channel identifier is associated with one of the orderable events, the control circuitry outputs via the content output interface the preview video content for an associated orderable event; and
wherein, whilst the preview video content is output, the control circuitry outputs via the content output interface an indication that said associated orderable television event may be ordered for viewing.

The video content receiver may further comprise:
data storage for storing the received preview video content prior to outputting the preview video content via the content output interface;
wherein the preview video content is retrieved from the data storage for outputting via the content output interface.

In an embodiment, the control circuitry is arranged to:
repeat the outputting, via the content output interface, of the preview video content for the orderable television event associated with the channel selection in the absence of user input received over the user interface causing the outputting of the preview video content to cease.

Preferably, a user input causing the outputting of the preview video content to cease comprises an order for viewing the orderable television event represented by the preview video content.

In the embodiment, more than one of the orderable television events are associated with a single channel identifier; and
the control circuitry is arranged to:
while outputting the first one of the orderable television events associated with the channel selection, receive a channel up command via the user interface;
in response to receiving the channel up command, output via the content output interface the preview video content for a second one of the orderable television events associated with the channel selection.

Preferably, the control circuitry is arranged to:
while outputting the second one of the orderable television events associated with the channel selection, receive a channel down command via the user interface;
in response to receiving the channel down command, output via the content output interface the preview video content for the first one of the orderable television events associated with the channel selection, beginning at the start of the preview video content for the first one of the orderable television event.

The control circuitry may additionally and/or alternatively be arranged to:
generate and output via the content output interface an electronic program guide arranged to present information concerning each of the television channel identifiers and the video content associated with each of the television channel identifiers;
wherein the channel selection is received via the user interface based on the electronic program guide.

According to an alternative aspect of the invention there is provided a method of providing access to a viewer-orderable television event, the method comprising:
receiving and storing preview video content for the orderable television event, wherein the orderable television event is associated with one of a plurality of channel identifiers not associated with a television broadcast channel;
receiving from a user a channel selection of the channel identifier associated with the orderable television event; and
in response to receiving the channel selection, outputting for presentation to the user the preview video content for the orderable television event as a full-screen display.

The orderable television event may comprise one of a group consisting of a pay-per-view event and a video-on-demand event.

Preferably, the channel selection comprises a channel up or a channel down command.

Additionally and/or alternatively the channel selection may comprise a direct channel entry command.

In an embodiment, the method further comprises:
while outputting the preview video content, receiving from the user a second channel selection of one of the plurality of channel identifiers assigned to a broadcast channel;
in response to receiving the second channel selection, outputting for presentation to the user video content for the broadcast channel associated with the second channel selection;
receiving from the user a third channel selection for the channel identifier associated with the orderable television event; and
in response to receiving the third channel selection, outputting for presentation to the user the preview video content for the orderable television event, starting at the beginning of the preview video content.

Preferably, the method further comprises:
receiving video content of the orderable television event;
while outputting the preview video content, outputting for presentation to the user an on-screen graphic allowing a user to order the orderable television event;
receiving an order from the user for the orderable television event; and
in response to receiving the order; outputting the video content of the orderable television event for presentation to the user.

In an embodiment, while outputting the video content of the orderable television event, receiving from the user a second channel selection of one of the plurality of channel identifiers assigned to a broadcast channel;
in response to receiving the second channel selection, storing a current time value of the video content of the orderable television event, and outputting for presentation to the user video content for the broadcast channel associated with the second channel selection;
receiving from the user a third channel selection for the channel identifier associated with the orderable television event; and
in response to receiving the third channel selection, outputting for presentation to the user the video content for the orderable television event, starting at the stored time value of the video content of the orderable television event.

The preview video content and the video content of the orderable television event may be received as a single data file.

The method may further comprise:
outputting an electronic program guide display for presentation to the user, wherein the electronic program guide display represents the plurality of channel identifiers;
wherein receiving from the user the channel selection of the channel identifier associated with the orderable television event comprises receiving a selection of a graphical element of the electronic program guide display representing the channel identifier associated with the orderable television event; and
wherein, when the outputting for presentation to the user of the preview video content for the orderable television event begins, ceasing outputting of the electronic program guide display.

Preferably, the method further comprises:
receiving and storing preview content for each of a plurality of orderable events comprising the first orderable television event; and
associating each of the orderable television events with a separate one of the plurality of channel identifiers.

Alternatively, the method further comprises:
receiving and storing preview content for each of a plurality of orderable events comprising the first orderable television event; and
associating a plurality of the orderable television events with a single one of the plurality of channel identifiers.

According to a further aspect of the invention, there is provided a video content receiver, comprising:
a content input interface configured to receive at least one of multiple television channels of video content, wherein each of the television channels is associated with a television channel identifier;
data storage configured to store the video content;
a content output interface configured to output the video content for presentation to a user;
a user interface configured to receive user input; and
control circuitry configured to:
   receive preview video content for each of a plurality of viewer-orderable television events via the content input interface;
   store the received preview video content for each of the orderable television events in the data storage, wherein each of the orderable television events is associated with a television channel identifier not associated with a broadcast channel;
   receive a channel selection via the user interface of a television channel identifier associated with at least one of the orderable television events;
   in response to receiving the channel selection, output via the content output interface the preview video content for one of the orderable television events associated with the channel selection as a full-screen display.

Preferably, the control circuitry is configured to:
repeat the outputting via the content output interface of the preview video content for the one of the orderable television events associated with the channel selection in the absence of user input received over the user interface causing the outputting of the preview video content to cease.

The user input causing the outputting of the preview video content to cease may comprise an order for viewing the orderable television event represented by the preview video content.

The control circuitry may be configured to:
receive a viewing control command via the user interface, wherein the viewing control command comprises at least a pause command; and
control the outputting of the preview video content according to the viewing control command.

In an embodiment, more than one of the orderable television events are associated with a single television channel identifier; and
the control circuitry is configured to:
while outputting the first one of the orderable television events associated with the channel selection, receive a channel up command via the user interface;
in response to receiving the channel up command, output via the content output interface the preview video content for a second one of the orderable television events associated with the channel selection.

Preferably, the control circuitry is configured to:
while outputting the second one of the orderable television events associated with the channel selection, receive a channel down command via the user interface;
in response to receiving the channel down command, output via the content output interface the preview video content for the first one of the orderable television events associated with the channel selection, beginning at the start of the preview video content for the first one of the orderable television events.

Preferably, the control circuitry is configured to:
generate and output via the content output interface an electronic program guide adapted to present information concerning each of the television channel identifiers and the video content associated with each of the television channel identifiers;
wherein the channel selection is received via the user interface based on the electronic program guide.

The invention also extends to a television content receiver, comprising:
a television input interface configured to receive video content for each of a plurality of broadcast television channels, and to receive preview video content and primary video content for each of a plurality of orderable television events, wherein each of the broadcast channels and each of the orderable television events is mapped to a television channel identifier;
a television output interface configured to output the received video content and the received preview video content for presentation to a user;
a user interface; and
control circuitry configured to:
   receive via the user interface a channel identifier viewing selection;
   if the selected channel identifier is associated with one of the broadcast television channels, output via the television output interface the video content for the one of the broadcast television channels for presentation to the user as a full-screen display; and
   if the selected channel identifier is associated with one of the orderable television events, output via the television output interface the preview video content for a first of the orderable television events associated with the selected channel identifier as a full-screen display, and output via the television output interface an indication that the one of the orderable television events may be ordered for viewing.

The television content receiver may further comprise:
data storage configured to store the received preview video content prior to outputting the preview video content via the television output interface;
wherein the preview video content is retrieved from the data storage for outputting via the television output interface.

The preview video content may be streamed from a video content source via the television input interface for output via the television output interface.

Preferably, multiple ones of the plurality of orderable television events are associated with the selected channel identifier; and
the control circuitry is configured to output the preview video content for each of the multiple orderable television events in a predetermined order in response to consecutive channel up or channel down commands received via the user interface.

Embodiments of the present invention will hereinafter be described by way of example, with reference to the accompanying drawings, in which:
Fig. 1 shows a simplified block diagram of a media content receiver;
Fig. 2 is a flow diagram illustrating a method of providing access to a viewer-orderable television event via a media content receiver as in Fig. 1;
Fig. 3 is a block diagram of a satellite television system;
Fig. 4 is a block diagram of a satellite television receiver of a satellite television system as in Fig. 3;
Fig. 5A is a conceptual diagram showing an example of channel number assignments for television broadcast channels and viewer-orderable television events;
Fig. 5B is a conceptual diagram showing another example of channel number assignments for television broadcast channels and viewer-orderable television events;
Fig. 6 is a graphical depiction of an electronic program guide in which multiple viewer-orderable television events are assigned to a single channel number; and
Fig. 7 is a graphical representation of a preview or trailer for a viewer-orderable event displayed as a full-screen display.

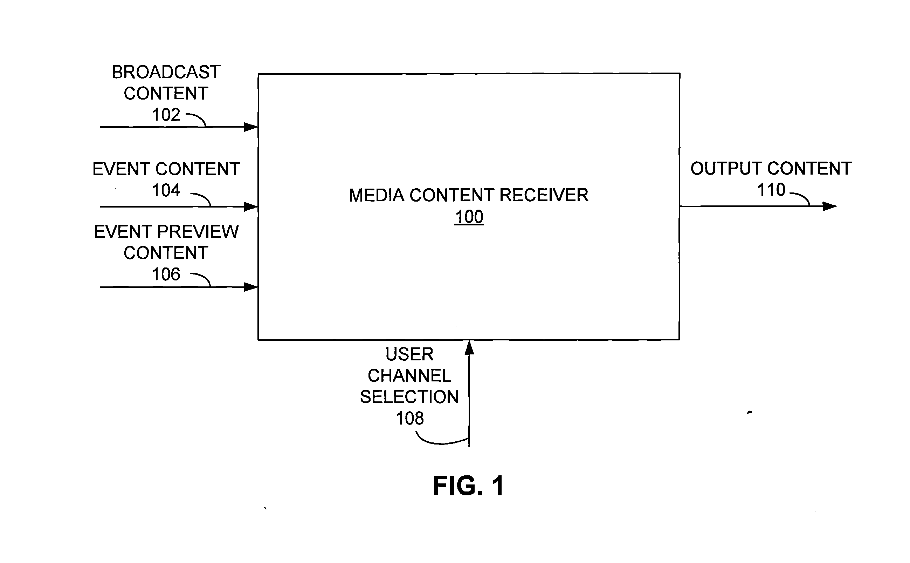

Fig. 1 is a block diagram illustrating a media content receiver 100, which may be a satellite, cable, or terrestrial ("over-the-air") television receiver or set-top box. Alternatively, the media content receiver 100 may be a television that incorporates a receiver. Alternately, the media content receiver 100 may be a desktop or laptop computer, mobile communication device, personal digital assistant (PDA), gaming system, either singularly or in combination, and/or any other device arranged to receive media content, such as video content with or without accompanying audio, and present such content to a user, either directly or via a separate output device.

The media content receiver 100 is capable of receiving television broadcast content 102, such as programming delivered over a plurality of broadcast channels. A user of the receiver 100 may provide a channel selection 108 of one or more of these channels, the content 102 of which is to be presented as output content 110 to the user, either directly or by way of a separate output device, such as a television or video monitor.

The media content receiver 100 also receives user-orderable or viewer-orderable event content 104. Generally, a viewer-orderable or user-orderable event is a video program that a viewer may order, rent, or similarly access individually, apart from other programming, such as other user-orderable events, and such as programming normally available to a user via a subscription from a content provider. One example of a viewer-orderable event is a video-on-demand (VOD) event. Typically, a video-on-demand event is a program, such as a movie, that may be viewed or enjoyed at a time of the user's choosing. Another example of a viewer-orderable event is a pay-per-view (PPV) event, such as a live sporting event, that is shown at a predetermined day and time. Other types of viewer-orderable or user-orderable events may be possible in other media content environments.

The receiver 100 is also able to receive event preview content 106 associated with the viewer-orderable event content 104. The event preview content 106 is generally much smaller in terms of size or duration than the event content 104 with which it is associated. For example, the event preview content 106 may include a trailer, preview, or other advertisement for the associated event content 104. In some embodiments, the event preview content 106 is received along with the associated event content 104 at the media content receiver 100, although such concurrent reception is not required.

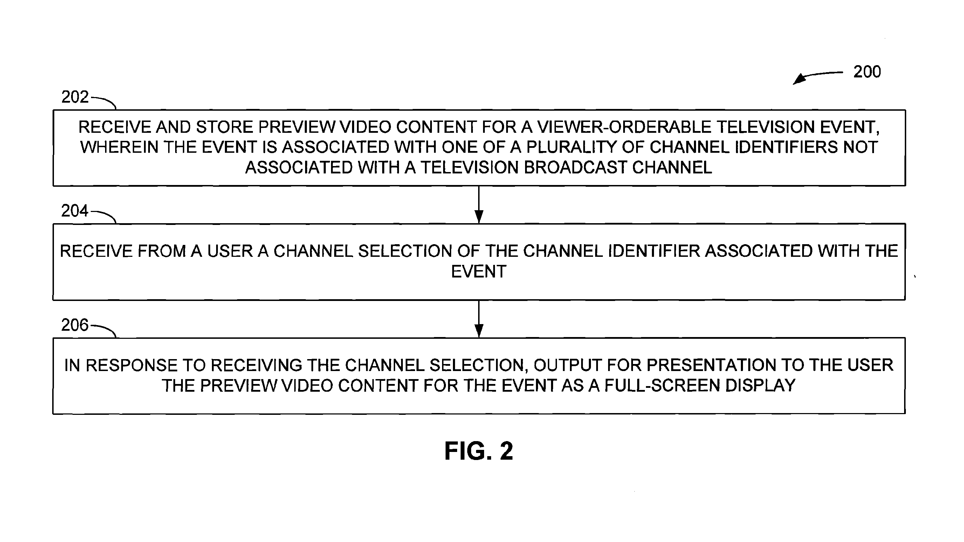

Fig. 2 presents a method 200 of providing access to a viewer-orderable television event using the media content receiver 100 of Fig. 1. In the method 200 of Fig. 2, the media content receiver 100 receives and stores preview video content 106 for an orderable television event (operation 202). The orderable television event is associated with one of a plurality of channel identifiers, such as channel numbers, not associated with a television broadcast channel. The receiver 100 receives from a user a channel selection 108 of the channel identifier associated with the orderable television event (operation 204). In response to receiving the channel selection 108, the media content receiver 100 outputs for presentation to the user the event preview content 106 as the output content 110 as a full-screen display (operation 206). Thereafter, the user may order the event content 104 received at the receiver 100 for presentation as output video content 110 based on the related event preview content 106.

In other embodiments, a computer-readable storage medium may have encoded thereon instructions for a processor or other control circuitry of the media content receiver 100, such as a television set-top box, to implement the method 200.

As a result of employing the method 200, the user of the receiver 100 may access and watch preview content for user-orderable events in much the same way as an ordinary broadcast television channel. Therefore, access to the viewer-orderable content may be greatly simplified, essentially eliminating any previous requirements for accessing viewer-orderable content by way of a separate electronic program guide selection or similar means. Additional advantages may be recognized from the various implementations of the invention discussed in greater detail below.

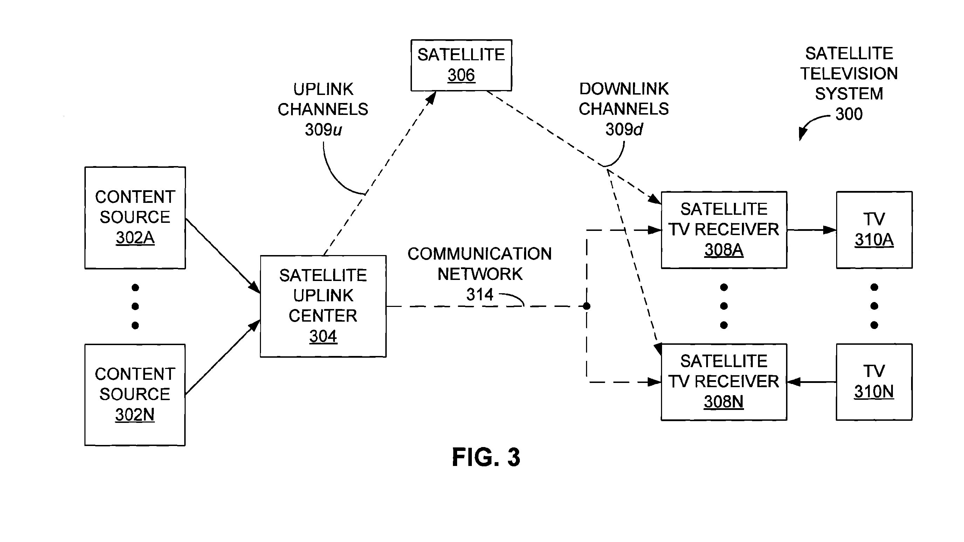

Fig. 3 is a simplified block diagram of a satellite television system 300 including multiple satellite television receivers or set-top boxes 308A-308N, each serving as a media content receiver 100 as described above in conjunction with Fig. 1. The satellite television system 300 also includes multiple content sources 302A-302N, a satellite uplink center or facility 304, at least one satellite 306, and multiple televisions 310A-310N communicatively coupled with the receivers 308A-308N. Other devices, including, but not limited to, signal transmitters, receivers, repeaters, and communication switches, may also be included in the satellite television system 300, but are not illustrated in Fig. 3.

As with a typical satellite television system, the satellite uplink center 304 is operated by a television content provider, to which a user of a receiver 308 may subscribe to receive television programming. The uplink facility 304 receives programming from the content sources 302, processes and transmits the content via a plurality of uplink channels 309u to the satellite 306, which, by way of its transponders, receives and retransmits the content to multiple satellite television receivers 308 via downlink channels 309d. Each of the receivers 308 then processes and relays that content to at least one television 310 for presentation to the user, such as by way of audio and/or video output. In Fig. 3, the content sources 302 may include, for example, national news, sports, shopping, or entertainment networks, and local television stations. One or more of the content sources 302 may also provide pay-per-view, video-on-demand, or other viewer-orderable event programming, along with any applicable event preview content, to the satellite uplink center 304 for ultimate transmission via the satellite 306 to the set-top boxes 308. Alternatively, at least some of this programming, such as the video-on-demand content and the preview content, may be transmitted or delivered from the uplink center 304 or another location to the receivers 308 via a separate wired or wireless communication network 314, such as the Internet or other wide-area network (WAN), a public switched telephone network (PSTN), a cellular communication network, or the like.

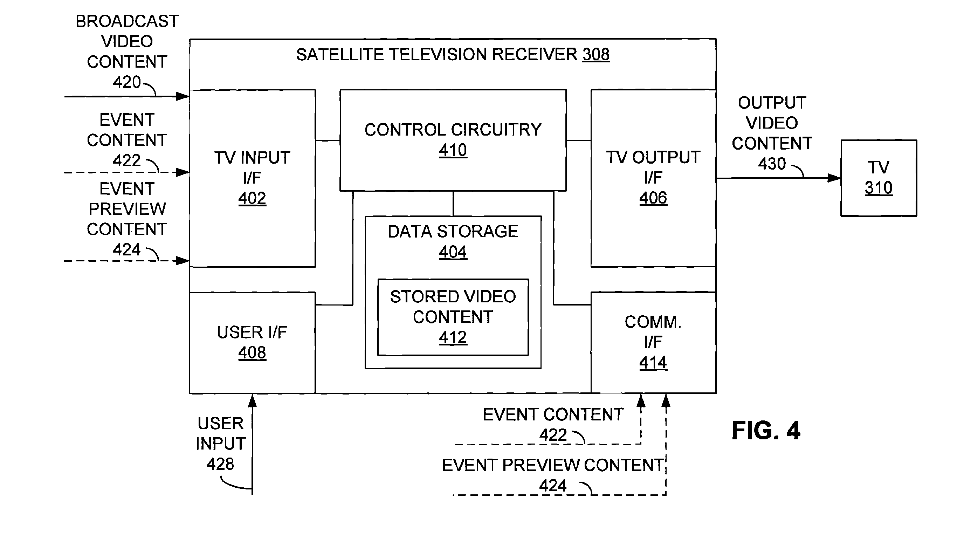

An example of one of the satellite television receivers or set-top boxes 308 is presented in the block diagram of Fig. 4. In this example, the receiver 308 includes a television input interface 402, data storage 404, a television output interface 406, a user interface 408, and control circuitry 410. Optionally, the receiver 308 may also include a separate communication interface 414. Other components or subassemblies normally associated with a satellite television receiver, such as a power supply and a "smart card" interface, may be included in the receiver 308 of Fig. 4, but are not discussed further below.
In addition, the functionality of the receiver 308 may be incorporated within a television or other display device.

The television input interface 402 receives broadcast video content 420 over the multiple downlink channels 309d, as mentioned above in conjunction with Fig. 3. Each downlink channel 309d is capable of carrying several broadcast channels of content 420, with each broadcast channel being associated with a particular major broadcast network, cable news channel, sports network, or other broadcast outlet. Further, each broadcast channel may be associated with a particular channel identifier, such as a channel number provided by the television content provider associated with the satellite uplink center 304.

The content input interface 402 may also receive viewer-orderable event video content 422 from the uplink center 304 and the satellite 306, along with event preview video content 424. The uplink center 304 may transmit any event media video content 422 and event preview video content 424 during periods of time when the receiver 308 may be in a standby mode, or at least when viewing of live content by a user is less likely, such as late at night.

In the case of an orderable event representing video-on-demand content, the event content 422 and its associated preview content 424 may be received concurrently at the television input interface 402 as a single data file (e.g., a video-on-demand (VOD) file). Further, the preview content 424 may contain more than one type or form of content, such as full-screen content, quarter-screen content, and/or other display sizes. Also included may be metadata describing various characteristics or attributes of the content, such as the title, plot synopsis, total time for the event, actor and director names, viewer rating, event ordering cost, and other information. As discussed again below, the video-on-demand content 422 and its preview content 424 may be subsequently stored in the data storage 404 to allow the user of the receiver 308 to access preview content 424, and possibly the associated video-on-demand content 422, at a time of the user's choosing.

If the event video content 422 is pay-per-view content that may only be transmitted and viewed once at a some predetermined date and time, the television input interface 402 may receive and store the event preview content 424 for the pay-per-view content at some time prior to the scheduled presentation time of the pay-per-view content 422, thus allowing the user to decide whether to order the pay-per-view event well in advance.

The television input interface 402 may receive the various types 420, 422, 424 of television content described above via a parabolic antenna and a low-noise block-converter (LNB) (not illustrated in Fig. 4), which receives, down-converts, and forwards the signal to the television input interface 402, typically via a coaxial cable. The television input interface 402 may include one or more tuners allowing the user to select particular programming channels of the incoming content for forwarding to the television 310, as well as to an audio receiver or other entertainment system components. The television input interface 402 may also perform any decryption, decoding, and similar processing of the received content 420, 422, 424 required to place the content in a format usable by the television output interface 406. Such a format may be one of the Motion Picture Experts Group (MPEG) formats, such as MPEG-2 or MPEG-4, although other television content format standards may be utilized.

If the receiver 308 were configured as a cable television set-top box for a cable television system, the television input interface 402 may receive television programming from a cable head-end. If the receiver 308 is a terrestrial television receiver, the television input interface 402 may receive the television content 420, 422, 424 via a terrestrial antenna receiving television signals "over the air".

The receiver 308 may include a separate communication interface 414 arranged to receive viewer-orderable event content 422 and event preview content 424, such as from the uplink facility 304 or another content provider system. The communication interface 414 may be any interface able to communicate via a network, such as the Internet or other wide-area network (WAN), a public switched telephone network (PSTN), a cellular communication network, or the like. Examples of the communication interface may include, but are not limited to, an IEEE 802.11 (i.e., Wi-Fi), Ethernet, Bluetooth®, or HomePlug® interface to a telephone line, or to a cable or Digital Subscriber Line (DSL) gateway for accessing the Internet or another WAN.

The television output interface 406 provides the selected television content 420, 422, 424 as output video content 430 to the television 310. To that end, the television output interface 406 may encode the selected television content in accordance with one or more television output formats. For example, the television output interface 406 may format the content for one or more of a composite or component video connection with associated audio connection, a modulated radio frequency (RF) connection, a High-Definition Multimedia Interface (HDMI) connection, or any other format compatible with the television 310.

To allow a user of the receiver 310 to control the selection of the television content 420, 422, 424, as well as perform other operations typically associated with a television receiver 308, the user interface 408 may facilitate the entry of commands by way of user input 428. The user interface 408 may be a remote control interface configured to receive such input 428 by way of infrared (IR), radio frequency (RF), acoustic, or other wireless signal technologies. To facilitate such information entry, the receiver 308 may provide a menu system presented to the user via the television 310. As described in greater detail below, such a menu system may include an electronic program guide (EPG) to allow the users to view a schedule and description of upcoming television programs. The user interface 408 may also include any of a keyboard, mouse, and/or other user input device.

The data storage 404 of the receiver 310 stores video content 412 received via the television input interface 402 (and, if included, the communication interface 414) for later presentation to the user via the television output interface 406. In one example the data storage 404 operates as an internal digital video recorder (DVR) unit allowing a user to record selected programs of the broadcast video content 420 for subsequent viewing at a more convenient time. The data storage 404 may also facilitate various playback viewing control commands, or "trick modes", such as fast-forward, rewind, slow-motion, and pause, of either the stored video content 412 or of programs currently being received via the television input interface 402. The data storage 404 may also store at least some orderable event video content 422 and associated event preview video content 424 for viewing, as is discussed more fully herein.

The data storage 404 may include any type of volatile or nonvolatile memory capable of storing video content 412, including, but not limited to, static random access memory (SRAM), dynamic random access memory (DRAM), flash memory, and magnetic and/or optical disk drives. Additionally, while the data storage 404 is shown in Fig. 4 as being incorporated within the satellite television receiver 308, the data storage 404 may be an external storage unit coupled to the receiver 308 by way of an additional interface (not shown in Fig. 4), such as the Universal Serial Bus (USB) interface, or another interface suitable for such a purpose.

In cable television distribution systems, for example, the preview video content may not be stored at or near the receiver 308, but may instead be stored at a video content source, such as a cable head-end system, which may also provide other video content, such as broadcast programming, to the receiver 308. Thus, at any time when the receiver 308 is to output the preview video content for presentation, the content may be streamed directly from the external video content source through the television input interface 402 and the television output interface 406 of the receiver 308 to the television 310 so that long-term storage of the preview content at the receiver 308 is not required. Further, the video content source may be able to respond to trick modes initiated by the user by way of user input 428 at the receiver 308.

The control circuitry 410 controls and/or accesses other components of the receiver 308, including, but not limited to, the television input interface 402, the data storage 404, the television output interface 406, the user interface 408, and the communication interface 414. The functionality of the control circuitry 410 as it more specifically relates to the use of the event preview video content 424 and associated event video content 422 is described more completely below. The control circuitry 410 may include one or more processors, such as a microprocessor, microcontroller, or digital signal processor (DSP), which execute instructions directing the processor to perform the functions associated with the control circuitry 410. The control circuitry 410 may be completely hardware-based logic, or may include a combination of hardware, firmware, and/or software elements.

Each of the viewer-orderable events represented in the event video content 422 that may be received at the television input interface 402 is associated with a channel identifier, much in the way that each broadcast channel that may be selected at the receiver 308 is mapped to a particular channel identifier, such as a channel number. By relating viewer-orderable events to channel numbers, a user may employ normal channel navigation commands, including direct channel number entry (e.g., entering the numbers "2" and "4" to access channel number 24), channel "up", and channel "down" commands, such as by way of a remote control device and the user interface 408, to access broadcast channels, as well as viewer-orderable events and associated preview content.

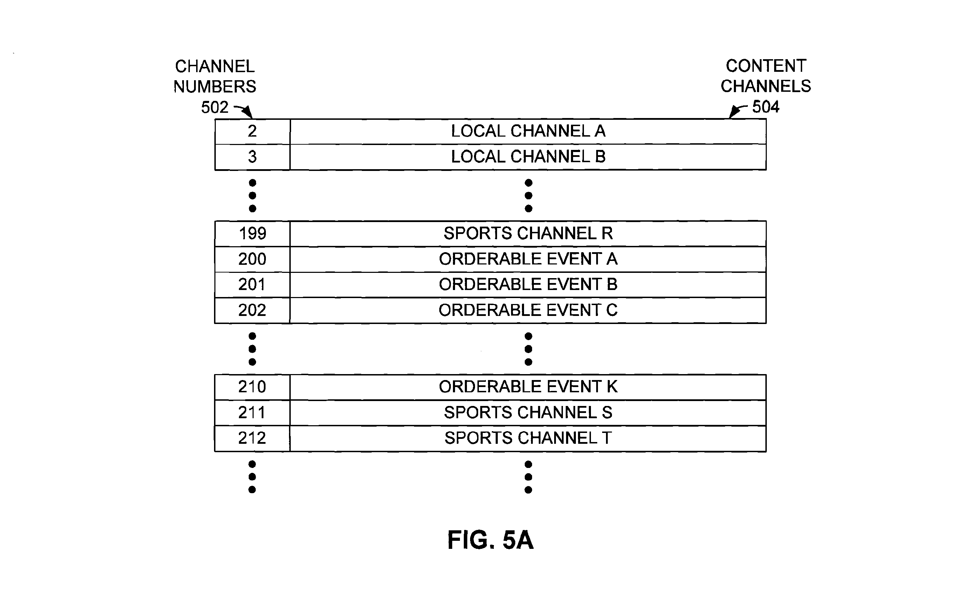

Fig. 5A is a graphical representation of one example in which each orderable event is associated with a unique channel number 502. More specifically, each of channels 2 through 199 is associated with a specific channel 504 of broadcast content, including local channels A and B, and sports channel R. Immediately thereafter, channel numbers 200 through 210 are each associated with a unique orderable event A-K, such as a VOD movie or a pay-per-view music concert. More broadcast channels (in this case, sports channels S and T) are then associated with the following channels numbers 502, starting at channel 211. While each of the orderable events is mapped to a contiguous group of channel numbers 502 in Fig. 5A, the channels associated with the events need not be arranged in such a manner. A benefit of this particular arrangement of channels numbers 502 and associated content channels 504 is that the user may access each orderable event A-K by direct channel number entry.

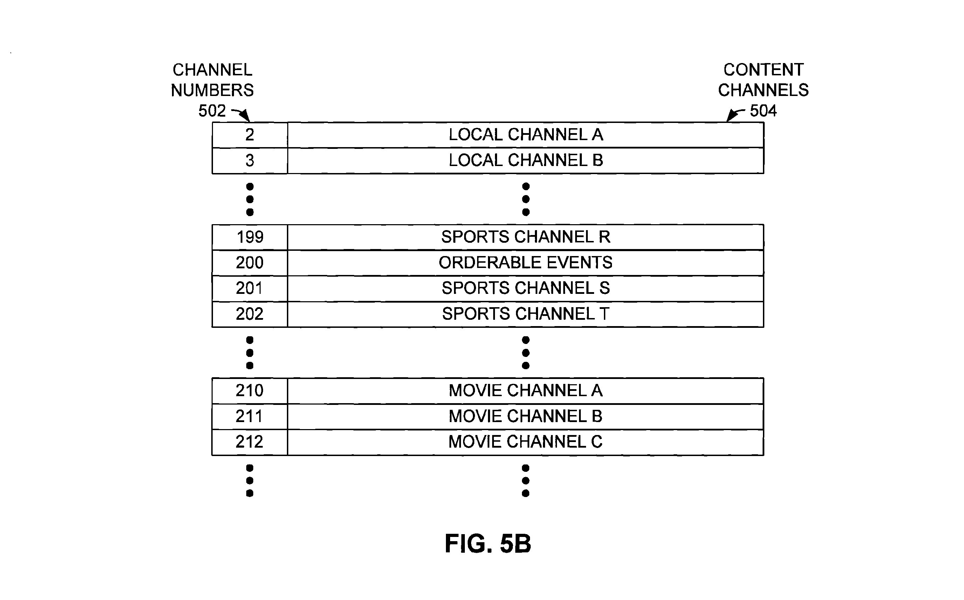

Fig. 5B provides an additional alternative and/or an alternative mapping scheme between channel numbers 502 and the television content channels 504. In this example, the broadcast channel assignments for channel numbers 2 through 199 are the same as shown in Fig. 5A. However, multiple orderable events are mapped to a single channel number 200. Thereafter, individual broadcast channels, such as sports channels S and T, and movie channels A-C, are each mapped to one of channels 201 through 212. Unlike the scenario of Fig. 5A, direct channel entry to navigate to a specific one of the multiple orderable events at channel 200 is at least difficult. However, unlike the channels assignments of Fig. 5A, in which a limited number of orderable events may be assigned to the available channel numbers 200-210, any number of orderable events may be mapped to the single channel 200 in Fig. 5B.

The user of the receiver 308 may access the broadcast and event channels via an electronic program guide. In those cases, the channel line-up may appear to the user substantially as shown in Figs. 5A and 5B. Alternatively, in the embodiment of Fig. 5B in which multiple event channels are mapped to a single channel number 200, the electronic program guide may expand channel 200 into multiple guide entries, with each entry representing a different orderable event. As with other electronic program guides, a particular item may be highlighted by way of directional (i.e., up, down, left, and right) command keys of a remote control device, and then selected by way of a selection key, typically labeled an "enter" or "OK" key.

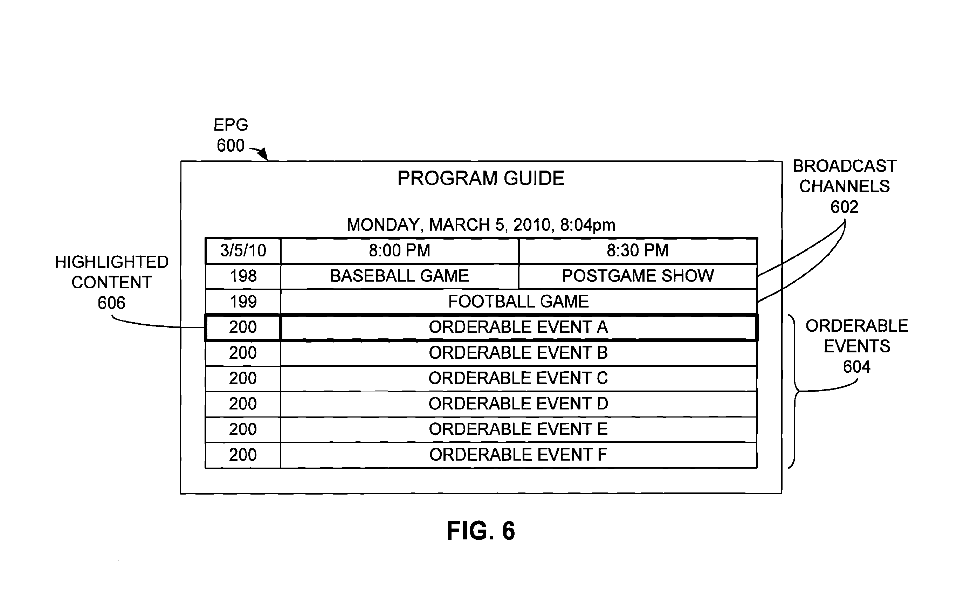

Fig. 6 presents one example of an electronic program guide 600, in which multiple orderable events 604, labeled A-F, mapped to channel number 200 are each shown individually in the program guide. Additionally, two broadcast channels 602 are mapped to separate channel numbers 198 and 199, shown adjacent to the event channel number 200. As shown in Fig. 6, the currently highlighted content 606 is the first orderable event A mapped to channel number 200.

Using the channel lineup of Fig. 6, and assuming that the preview video content 424 associated with each of the events A-F of channel 200 is stored in the data storage 404 of the receiver 308, the user may access the preview video content 424 for each of the orderable events A-F by way of either the electronic program guide or by way of channel navigation commands. If the user employs the program guide to highlight one of the orderable events A-F of channel 200, and then selects that event for viewing, the control circuitry 410 may respond by delivering the preview video content 424 that is associated with the selected event from the data storage 404 via the television output interface 406 to the coupled television 310 for presentation to the user as a full-screen display.

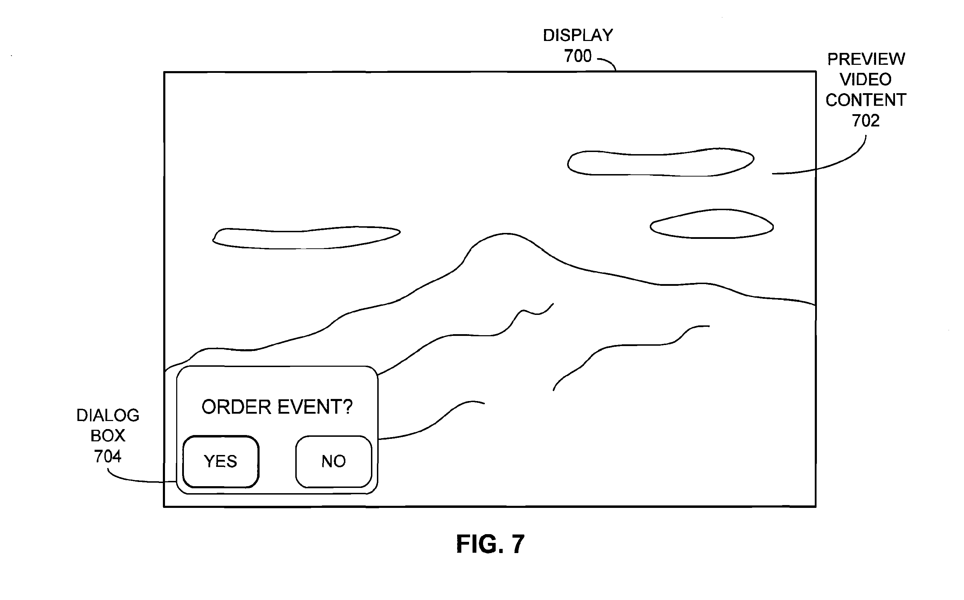

Fig. 7 is a graphical display of a single frame of the selected preview video content 702 as a full-screen display 700. In many implementations, the selected preview video content 702 is a short video segment, such as a trailer of several seconds to a few minutes in length, although the selected preview video content 702 may take other forms as well. Presuming the user does not tune away from the selected preview video content 702 by the time the selected preview content 702 has completed, the control circuitry 410 may restart the presentation of the preview content 702 from its beginning, and continue to do so until the user provides further input.

At some point while presenting the event preview video content 702, the control circuitry 410 may cause the television output interface 406 to overlay a graphical representation by which the user may order the actual event. In the example of Fig. 7, a pop-up dialog box 704 allowing the user to order the event by way of remote control or similar means is presented atop the full-screen display 700 of the preview video content 702. Other information, such as the title of the event and the cost to order the event, may also be included in the dialog box 704. To protect against accidental event ordering, the control circuitry 410 may present a confirmation dialog box (not shown in Fig. 7) or similar graphical structure in response to an affirmative response to the first dialog box 704.

Once the user orders the event via the user interface 408, the control circuitry 410 allows the ordered event to be presented to the user by way of the television output interface 406. For example, in the case of a video-on-demand event, the control circuitry 410 may cause the event video content 422 stored in the data storage 404 to be displayed to the user immediately from the data storage 404. Additionally and/or alternatively, the event video content 422 may be received or streamed from the uplink center 304 via the satellite 306 and the television input interface 402, by way of the communication interface 414, or through another communication path. If the event video content 422 represents a live pay-per-view event, the control circuitry 410 will present the event content 422 to the user at the predetermined time of the event.

While watching the event preview video content 702 of Fig. 7, the user may elect to change channels instead of ordering the corresponding event. For example, while viewing the preview content 702 for the orderable event A, the user may issue a channel up command via a remote control device and the user interface 408. In response, the control circuitry 410 may cause the television input interface 402 to begin displaying the preview content in a full-screen display for the event associated with the next orderable event (i.e., orderable event B, as shown in Fig. 6). Similarly, a subsequent channel up command will cause the control circuitry 410 to present the full-screen event preview video content 702 to the user for orderable event C from its beginning. In a further example in which the user issues two channel down commands while the preview content 702 for orderable event C is being displayed, the control circuitry 410 will cause the full-screen preview content 702 for orderable event B to be presented from its beginning, followed by the preview content 702 for orderable event A.

Restarting the preview video content 702 each time the user navigates to the channel for the associated event may be different in some implementations from how the viewing of the actual event video content 422 is controlled. Under that scenario, when a user navigates away from, and then back to, a channel location currently presenting previously ordered event content 422, the control circuitry 410 may cause the presentation to continue at the point at which the user first navigated away from the associated channel in response to the user returning to that channel. To implement this functionality, the control circuitry 410 may store a current time value, such as a frame number, for the event being presented when the user navigates away from the associated channel. The control circuitry 410 may then use that same time value to determine the point at which the event presentation is to resume, should the user navigate back to that channel.

A user issuing a direct channel number entry command to channel number 200 will cause the control circuitry 410 to begin presentation of the preview video content 702 for the first orderable event associated with that channel (i.e., orderable event A). A preview content 702 for a different orderable event A-F may be presented each time the user navigates to channel number 200 from some other channel number.

To further enhance the experience of accessing and viewing orderable events and their preview content 424 as typical broadcast channels, other user-controllable functions aside from channel navigation that are normally applied to broadcast channels may also be valid for the event preview content 424 and the event content 422 itself. For example, the user may employ DVR trick modes, such as pause, rewind, fast-forward, and the like, to either or both of the preview content 424 and event content 422 for each orderable event.

Further, to allow the user to peruse information pertaining to the event or event preview content, the control circuitry 410 may present descriptive information, possibly including, not limited to, the title of the event, a viewer rating, synopsis, names of actors, cost to view, and the like, upon reception of an "info" (information) command from the user via the user interface 408. Such functionality may mirror similar information provided for any broadcast channel in response to the same user command.

The control circuitry 410 may also apply to the orderable events and/or their related preview content 424 any parental lock guidelines currently in force for the broadcast channels. In addition, in some cases, access to video-on-demand and other orderable events may be blocked by such guidelines, which are typically password-protected. Access to the event preview content 424 may then be controlled by a separate parental lock option, regardless of the accessibility granted to the event content 422. As a result, preview video content 424 for orderable events may be viewable for certain users, while the video content 422 for the actual event may not.

It will be appreciated that embodiments described herein facilitate access to viewer-orderable event video content, and associated preview or trailer video content, in a manner similar to that employed to access normal broadcast television channels. Typical channel navigation by a user, subscriber, or viewer of channels associated with event content may enable access to event preview content in a seamless manner comparable to typical broadcast channel access. Such access may be provided by way of an electronic program guide, or via typical channel navigation commands. Further, other user-settable functions normally applicable to broadcast channels, such as information recall, parental locking control, and the like, may be applied to the channels associated with orderable events.

The invention has been described largely within the context of satellite television receivers or set-top boxes. However, other electronic devices, such as cable and terrestrial television set-top boxes, televisions, digital video recorders (DVRs), mobile communication devices, PDAs, general-purpose computer systems, gaming systems, and the like, may incorporate various aspects of the functionality described above to similar effect. In addition, individual features described herein may be combined with other features to create various combinations of features.

It will be appreciated that modifications in, and variations to, the embodiments as described and illustrated, may be made within the scope of the invention as defined by the accompanying claims.

## Claims

1. A method of providing access to a viewer-orderable television event, the method comprising:
receiving and storing preview video content for the orderable television event, wherein the orderable television event is associated with one of a plurality of channel identifiers not associated with a television broadcast channel;
receiving from a user a channel selection of the channel identifier associated with the orderable television event; and
in response to receiving the channel selection, outputting for presentation to the user the preview video content for the orderable television event.

2. A method as claimed in Claim 1, further comprising:
while outputting the preview video content, outputting for presentation to the user an on-screen graphic allowing a user to order the orderable television event; and
in response to receiving the order obtaining the video content of the orderable television event.

3. A method as claimed in Claim 2, further comprising:
receiving and outputting the video content of the orderable television event;
while outputting the video content of the orderable television event, receiving from the user a second channel selection of one of the plurality of channel identifiers assigned to a broadcast channel;
in response to receiving the second channel selection, storing a current time value of the video content of the orderable television event, and outputting for presentation to the user video content for the broadcast channel associated with the second channel selection;
receiving from the user a third channel selection for the channel identifier associated with the orderable television event; and
in response to receiving the third channel selection, outputting for presentation to the user the video content for the orderable television event, starting at the stored time value of the video content of the orderable television event.

4. A method as claimed in any preceding claim, further comprising:
while outputting the preview video content, receiving from the user a second channel selection of one of the plurality of channel identifiers assigned to a broadcast channel;
in response to receiving the second channel selection, outputting for presentation to the user video content for the broadcast channel associated with the second channel selection;
receiving from the user a third channel selection for the channel identifier associated with the orderable television event; and
in response to receiving the third channel selection, outputting for presentation to the user the preview video content for the orderable television event, starting at the beginning of the preview video content.

5. A method as claimed in any preceding claim, wherein:
the preview video content and video content of the orderable television event are received as a single data file.

6. A method as claimed in any preceding claim, further comprising:
outputting an electronic program guide display for presentation to the user, wherein the electronic program guide display represents the plurality of channel identifiers;
wherein receiving from the user the channel selection of the channel identifier associated with the orderable television event comprises receiving a selection of a graphical element of the electronic program guide display representing the channel identifier associated with the orderable television event; and
wherein, when the outputting for presentation to the user of the preview video content for the orderable television event begins, ceasing outputting of the electronic program guide display.

7. A method as claimed in any preceding claim, further comprising:
receiving and storing preview content for each of a plurality of orderable events comprising the first orderable television event; and
associating each of the orderable television events with a separate one of the plurality of channel identifiers.

8. A method as claimed in any of Claims 1 to 6, further comprising:
receiving and storing preview content for each of a plurality of orderable events comprising the first orderable television event; and
associating a plurality of the orderable television events with a single one of the plurality of channel identifiers.

9. A video content receiver, comprising:
a content input interface for receiving video content of a plurality of broadcast channels, and for receiving preview video content and primary video content of a plurality of orderable video events, wherein each of the broadcast channels and each of the orderable video events is associated with a corresponding channel identifier;
a content output interface for outputting received video content and received preview video content for presentation to a user;
a user interface; and
control circuitry arranged receive via the user interface a selected channel identifier indicating a channel selected for presentation;
wherein, if the selected channel identifier is associated with one of the broadcast channels, the control circuitry outputs via the content output interface the video content of an associated broadcast channel for presentation to the user;
wherein, if the selected channel identifier is associated with one of the orderable events, the control circuitry outputs via the content output interface the preview video content for an associated orderable event; and
wherein whilst the preview video content is output, the control circuitry outputs via the content output interface an indication that said associated orderable television event may be ordered for viewing.

10. A video content receiver as claimed in Claim 9, further comprising:
data storage for storing the received preview video content prior to outputting the preview video content via the content output interface;
wherein the preview video content is retrieved from the data storage for outputting via the content output interface.

11. A video content receiver as claimed in Claim 9 or Claim 10, wherein the control circuitry is arranged to:
repeat the outputting, via the content output interface, of the preview video content for the orderable television event associated with the channel selection in the absence of user input received over the user interface causing the outputting of the preview video content to cease.

12. A video content receiver as claimed in any of Claims 9 to 11, wherein:
a user input causing the outputting of the preview video content to cease comprises an order for viewing the orderable television event represented by the preview video content.

13. A video content receiver as claimed in any of Claims 9 to 12, wherein:
more than one of the orderable television events are associated with a single channel identifier; and
the control circuitry is arranged to:
while outputting the first one of the orderable television events associated with the channel selection, receive a channel up command via the user interface;
in response to receiving the channel up command, output via the content output interface the preview video content for a second one of the orderable television events associated with the channel selection.

14. A video content receiver as claimed in Claim 13, wherein the control circuitry is arranged to:
while outputting the second one of the orderable television events associated with the channel selection, receive a channel down command via the user interface;
in response to receiving the channel down command, output via the content output interface the preview video content for the first one of the orderable television events associated with the channel selection, beginning at the start of the preview video content for the first one of the orderable television events.

15. A video content receiver as claimed in any of Claims 9 to 11, wherein the control circuitry is arranged to:
generate and output via the content output interface an electronic program guide arranged to present information concerning each of the television channel identifiers and the video content associated with each of the television channel identifiers;
wherein the channel selection is received via the user interface based on the electronic program guide.
